# FASCICULE DE BREVET EUROPEEN

(11) **EP 1 587 876 B1**
(45) Date de publication et mention de la délivrance du brevet: **21.07.2010**
(21) Numéro de dépôt: 04704265.0
(22) Date de dépôt: 22.01.2004
(51) Int. Cl.: C08L 101/12, H01M 8/10, B01J 39/08, B01J 41/08

(54) **MATERIAU HYBRIDE ORGANIQUE-INORGANIQUE CONDUCTEUR COMPRENANT UNE PHASE MESOPOREUSE, MEMBRANE, ELECTRODE, ET PILE A COMBUSTIBLE.**
MESOPORÖSE PHASE ENTHALTENDES LEITENDES ORGANISCH-ANORGANISCHES HYBRIDMATERIAL SOWIE DIESES MATERIAL ENTHALTENDE MEMBRAN, ELEKTRODE UND BRENNSTOFFZELLE
CONDUCTIVE ORGANIC-INORGANIC HYBRID MATERIAL COMPRISING A MESOPOROUS PHASE, MEMBRANE, ELECTRODE AND FUEL CELL

(30) Priorité: 23.01.2003 FR 0300724
(43) Date de publication de la demande: 26.10.2005
(73) Titulaire: Commissariat à l'Énergie Atomique et aux Énergies Alternatives, 75015 Paris (FR)
(72) Inventeur: VALLE, Karine, F-37000 Tours (FR); BELLEVILLE, Philippe, F-37000 Tours (FR); SANCHEZ, Clément, F-91100 Gif Sur Yvette (FR)
(74) Mandataire: Poulin, Gérard
(86) Numéro de dépôt international: PCT/FR2004/050026
(87) Numéro de publication internationale: WO 2004/067640

(56) Documents cités:
- EP-A- 0 875 524
- WO-A-99/37705
- DE-A- 19 943 244
- FR-A- 2 811 323
- LACONTI A B ET AL: "Proton exchange membrane electrochemical capacitors and fuel cells for pulse power applications" 22 juin 1992 (1992-06-22), PROCEEDINGS OF THE INTERNATIONAL POWER SOURCES SYMPOSIUM. CHERRY HILL, NJ., JUNE 22 - 25, 1992, NEW YORK, IEEE, US, PAGE(S) 298 , XP010103434 ISBN: 0-7803-0552-3

## Description

La présente invention concerne un matériau hybride organique-inorganique conducteur comprenant une phase minérale mésoporeuse.

L'invention concerne, en outre, une membrane et une électrode comprenant ce matériau.

L'invention a trait également à une pile à combustible comprenant au moins une telle membrane et/ou au moins une telle électrode.

L'invention est relative enfin à un procédé de préparation du matériau hybride organique-inorganique.

Le domaine technique de l'invention peut être défini, de manière générale, comme celui des matériaux poreux et plus particulièrement des matériaux dits mésoporeux.

Plus précisément, l'invention se situe dans le domaine des matériaux mésoporeux destiné à des utilisations en électrochimie, en particulier dans les piles à combustibles, telles que les (« PEMFC ») (« Polymeric Electrolyte Membrane Fuel Cell », en anglais).

On sait qu'un des éléments essentiels des piles à combustible, par exemple celles utilisées dans le secteur de l'automobile et de la téléphonie portable est la membrane échangeuse protonique.

Ces membranes structurent le coeur de la pile à combustible et doivent par conséquent présenter de bonnes performances en conduction protonique, ainsi qu'une faible perméabilité aux gaz réactants (H₂/O₂). Les propriétés des matériaux qui constituent les électrolytes solides polymériques formant ces membranes et qui doivent résister à des milliers d'heures de fonctionnement de la pile, sont essentiellement la stabilité chimique, et la résistance à l'hydrolyse et à l'oxydation, notamment la résistance hydrothermale, et une certaine flexibilité mécanique.

Les membranes préparées à partir d'ionomères perfluorés, particulièrement le Nafion^{®}, remplissent ces exigences pour des températures de fonctionnement inférieures à 90°C.

Cette température est cependant insuffisante pour permettre l'intégration des piles à combustible comprenant de telles membranes dans un véhicule. Cette intégration suppose en effet l'augmentation de la température de fonctionnement vers 100-150°C dans le but d'accroître le rendement de conversion courant/énergie et donc l'efficacité de la pile, mais également d'améliorer le contrôle de la gestion thermique en diminuant le volume du radiateur.

Par ailleurs, l'efficacité conductrice des membranes protoniques est fortement liée à la présence d'eau dans le milieu. Or à des températures supérieures à 100°C, l'eau est rapidement évacuée de la membrane, la conductivité chute et la perméabilité au combustible s'accroît. A ces températures, cette diminution des performances peut s'accompagner d'une dégradation de la membrane. Pour résoudre les problèmes de dessèchement des membranes dans les piles à combustibles à haute température, à savoir au moins égale à 100°C, le maintien d'une humidité relative maximale 80-100% est nécessaire mais difficilement réalisable par une source externe.

Par contre, il est connu que l'insertion ou la croissance d'une charge hygroscopique « in situ » favorise la rétention d'eau à l'intérieur du polymère, retarde ce processus de déshydratation du milieu protonique et assure ainsi la conduction des protons. Outre son caractère hydrophile cette charge fonctionnelle peut posséder intrinsèquement des propriétés conductrices et ainsi accroître les performances de la membrane.

Afin d'augmenter la rétention d'eau des membranes dans les piles à combustibles à haute température, de nombreuses membranes composites ont été développées, notamment par croissance de nanoparticules inorganiques hydrophiles. Ces nano-charges minérales peuvent être synthétisées par voie sol-gel dans des matrices organiques sulfonées perfluorées, mais aussi dans des matrices constituées de composés polyaromatiques, ou de polyéthers. Ces membranes sont nommées présentement membranes hybrides organiques-inorganiques.

Les particules minérales peuvent être :
- conductrices, elles sont alors de type acide comme par exemple l'acide tungstophosphorique, ou tungstosilicique, ou antimonique, ou de type phosphates et phosphonates métalliques comme le phosphate de zirconium [1-7] ;
- non conductrices et simplement hydrophiles comme les oxydes de métaux et de métalloïdes TiO₂, SiO₂...[8-19].

Outre l'amélioration de la gestion de l'eau à haute température, la diminution de la perméabilité de la membrane aux combustibles est démontrée dans ces membranes hybrides organiques-inorganiques par rapport aux membranes classiques de type Nafion^{®} par exemple. La stabilité thermique et chimique reste toutefois limitée car inhérente à la matrice polymère organique sulfoné utilisée.

Les travaux présentés récemment par Rozière et al. [19] ont trait à la fonctionnalisation du réseau silicate par un groupement amine qui améliore l'interaction entre la phase inorganique et le polymère organique via des liaisons iono-covalentes.

Les recherches menées par Honma et al. [20-21] et Park et al. [22] sur la croissance de matrices hybrides organiques-inorganiques continues par dispersion d'hétéropolyacides respectivement dans des copolymères poly(isocyanopropyl)silsesquioxanes-polymère organique (PEG, PPO, PTMO) ou dans des cocondensats de glycidyloxypropyltriméthoxysilane (GLYMO) et de tétraéthoxysilane ouvrent de nouvelles perspectives d'utilisation de chaînes polymères thermostables.

Même si les hétéropolyacides minéraux restent très attractifs par leur conductivité intrinsèque, leur incorporation à des taux de charges importants (30 à 70% en masse) dans des polymères peu ou non conducteurs pose généralement des problèmes d'élution progressive et conséquente lors du fonctionnement de la pile du fait de leur solubilité dans l'eau.

Parallèlement aux matériaux composites ou hybrides organiques-inorganiques, décrits plus haut, les matériaux mésoporeux initialement imaginés pour la catalyse, c'est-à-dire essentiellement la silice et les aluminosilicates, ont commencé à susciter l'attention de certains électrochimistes.

Rappelons que les matériaux dits mésoporeux, sont des solides qui présentent au sein de leur structure des pores possédant une taille comprise typiquement entre 2 et 80 nm, qui est intermédiaire entre celle des micropores et celle des macropores.

Typiquement, les matériaux mésoporeux sont des oxydes métalliques amorphes ou cristallins dans lesquels les pores sont généralement répartis de manière aléatoire avec une distribution très large de la taille des pores.

Les matériaux mésoporeux structurés, dénommés matériaux « mésostructurés », correspondent quant à eux à des réseaux poreux structurés qui présentent un agencement spatial organisé de mésopores. Cette périodicité spatiale des pores est caractérisée par l'apparition d'un pic au moins à bas angle dans un diagramme de diffusion des rayons X ; ce pic est associé à une distance de répétition qui est généralement comprise entre 2 et 50 nm. La nanostructure est vérifiée par microscopie électronique en transmission.

Dans ce cadre, le procédé sol-gel offre des stratégies innovantes dans la construction de ces édifices mésoporeux organisés, notamment par polymérisation inorganique au sein de systèmes moléculaires organisés (SMO) de tensioactifs ou au sein de systèmes polymériques organisés (SPO) de copolymères à blocs. En présence d'agents texturants de type SMO, cette chimie douce permet également de synthétiser, à partir de précurseurs inorganiques et organométalliques, de tels réseaux mésostructurés à nature organominérale appelés matériaux hybrides organiques-inorganiques. Les propriétés de ces matériaux hybrides organiques-inorganiques mésoporeux dépendent non seulement de la nature chimique des composantes organique et inorganique, mais également de la synergie qui peut apparaître entre ces deux chimies. C'est la raison pour laquelle ces matériaux sont souvent dénommés matériaux « multifonctionnels ».

Le degré d'organisation est gouverné par la nature de ces deux entités organique et inorganique mais aussi par l'agencement multiéchelle de cet arrangement. Ainsi, l'intégration dans une structure mésoporeuse ordonnée, dans les « murs » comme dans les pores, de fonctionnalités chimiques capables d'induire des propriétés spécifiques présente un grand intérêt dans diverses applications (catalyse, filtration, électrochimie...) [37].

Colomer et al. [23-24] ont préparé des silices mésoporeuses non organisées par co-agrégation de nanoparticules de silice de différentes tailles ou par croissance contrôlée (pH) de silice colloïdale. Ils ont étudié l'impact de telles porosités sur la conductivité protonique en milieu acide de ces silices pour les PEMFCs. Le traitement thermique élevé vers 500-700°C qui est nécessaire à la génération de la porosité et la consolidation de la silice mésoporeuse limite néanmoins cette technique à des réseaux purement inorganiques.

A contrario, la structuration de la silice mésoporeuse synthétisée par l'utilisation de surfactants ne nécessite pas de traitement thermique élevé et autorise ainsi une fonctionnalisation organique lors de la croissance du réseau [25]. De plus, la structure de ces matériaux est souvent bien définie. Cette organisation, liée à la grande surface spécifique, joue un rôle important pour améliorer la conduction des protons au travers du réseau hydrophile. Minami et al. [26-28] ont imprégné ce type de silice par de l'acide sulfurique ou phosphorique en étudiant l'influence de la taille des pores et de la surface spécifique sur la conductivité et la porosité. Les propriétés atteintes en terme de conductivité sont très intéressantes de l'ordre de 2-3.10⁻¹ S/cm.

Par ailleurs, différentes silices hybrides organiques-inorganiques mésostructurées possédant une fonctionnalité SO₃H [29-31] ou PO₃H₂ [32] dans les pores offrent un potentiel intéressant pour les piles à combustibles bien qu'essentiellement développées pour des applications catalytiques. Kaliaguine et al. [33] qui travaillent dans le domaine électrochimique ont effectué des mesures de conductivité et d'adsorption d'eau dans ce type de composés. Ces silices présentent dans l'ensemble un caractère hydrophile prononcé et les mesures de conductivité sont intéressantes pour des systèmes non optimisés, elles sont de l'ordre de 10⁻² S/cm à 80°C sous 100% d'humidité relative.

Les récentes références bibliographiques ci-dessus concernant l'éventuelle utilisation dans des dispositifs électrochimiques de matériaux mésoporeux, tels que les silices mésoporeuses mésostructurés construites par SMO et SPO ne peuvent donner lieu à une application directe pour les piles à combustibles, car il est impossible de mettre les matériaux tels que décrits et mentionnés dans ces documents sous la forme de membranes.

Quelques articles concernent l'intégration d'une chaîne organique polymérique liée de façon covalente à l'oxyde et intégrée dans les murs du réseau mésoporeux. Notamment, Wei et al. [34] ont synthétisé un matériau hybride organique-inorganique mésoporeux de type polystyrène-SiO₂ à partir d'un polymère silylé et de TEOS en présence d'un surfactant, l'acide dibenzoyltartrique. D'autres auteurs comme Loy et al. [35] ou Stein et al. [36] ont décrit la construction de réseau silicate mésostructuré intégrant dans leurs murs des chaînes éthylènes de 1 à 4 motifs. De nouveau, ces matériaux ne peuvent être mis sous forme de membranes et ne sont pas pourvus d'une quelconque conductivité. WO-A-9937705 décrit un matériau métastructuré conducteur comprenant un composé metallique multivalent contenant des murs créant un réseau mesoporeux à porosité ouverte, et au moins un copolymère block amphiphile intégré dans lesdits murs.

Il existe donc un besoin pour un matériau mésoporeux qui puisse être mis sous la forme d'une membrane, en particulier d'une membrane homogène et flexible.

Il existe encore un besoin pour un matériau mésoporeux qui soit thermiquement et chimiquement stable et résistant à l'hydrolyse et à l'oxydation.

Il existe ensuite un besoin pour un tel matériau mésoporeux pouvant en outre être pourvu d'une conductivité, en particulier d'une conductivité ionique, de préférence protonique, élevée, et pouvant ainsi être mis en oeuvre sous forme de membrane dans des dispositifs électrochimiques, tels que des piles à combustible à des températures de fonctionnement élevées, par exemple voisines de 100 à 150°C.

Ce matériau, dans le cadre d'une telle utilisation, doit permettre au contraire des membranes de l'art antérieur, par exemple à base d'ionomères perfluorés, une rétention d'eau élevée, même à haute température afin d'éviter le dessèchement de la membrane, et doit posséder une conductivité élevée et une faible perméabilité au combustible à haute température, associée à une absence de dégradation de la membrane.

Le but de la présente invention est de fournir un matériau hybride organique-inorganique mésoporeux qui réponde à l'ensemble des besoins indiqués ci-dessus.

Le but de la présente invention est encore de fournir un matériau mésoporeux qui ne présente pas les inconvénients, défauts et désavantages des matériaux de l'art antérieur et qui, s'il est muni de fonctions conductrices, puisse être utilisé dans un dispositif électrochimique, tel qu'une pile à combustible, en présentant d'excellentes performances.

Ce but et d'autres encore sont atteints, conformément à l'invention par un matériau hybride organique-inorganique conducteur comprenant une phase minérale dans laquelle des murs délimitent des pores formant un réseau mésoporeux structuré à porosité ouverte ; ledit matériau comprenant en outre un oligomère ou un polymère organique intégré dans lesdits murs et lié par covalence à la phase minérale, et éventuellement une autre phase à l'intérieur des pores, constituée par au moins un agent tensioactif ; au moins un parmi la phase minérale, et l'oligomère ou le polymère organique présentant des fonctions conductrices et/ou hydrophiles.

La structure spécifique du matériau hybride conducteur selon l'invention, qui comprend au moins une phase minérale mésoporeuse (avec éventuellement une phase tensioactive), dont la tenue mécanique est assurée par une chaîne polymérique organique intégrée dans les murs du réseau mésoporeux, n'a jamais été décrite dans l'art antérieur.

En effet, il n'est pas fait état dans l'art antérieur de la formation d'un matériau - par exemple, sous forme de membrane - hybride organique-inorganique mésoporeux continu à polymère intégré, ledit matériau présentant, en outre, des fonctions conductrices et/ou hydrophiles, par exemple dans les pores.

Notamment, compte tenu de leur grande surface spécifique et de leur structure particulière, l'utilisation de tels matériaux hybrides organiques-inorganiques conducteurs comprenant une phase mésoporeuse dans les membranes conductrices protoniques offre de nombreuses possibilités favorisant la continuité des chemins de conduction à condition d'avoir une porosité ouverte.

On entend par porosité ouverte, une porosité formée de pores débouchants et restant accessibles aux espèces conductrices.

Selon l'invention, au moins un parmi la phase minérale et l'oligomère ou le polymère organique présente des fonctions conductrices et/ou hydrophiles.

Ainsi, la phase minérale peut présenter des fonctions conductrices et/ou hydrophiles sur les surfaces de ses pores.

De même, l'oligomère ou le polymère organique peut présenter des fonctions conductrices et/ou hydrophiles.

Dans une forme de réalisation, l'autre phase éventuelle, à l'intérieur des pores, constituée par au moins un agent tensioactif, peut aussi présenter éventuellement des fonctions conductrices et/ou hydrophiles ; étant entendu que la phase minérale et/ou l'oligomère ou le polymère organique présente obligatoirement des fonctions conductrices et/ou hydrophiles.

Par fonctions conductrices, on entend généralement que ces fonctions présentent une conductivité ionique, de préférence protonique.

Dans le cas où le matériau comprend seulement une phase minérale et un oligomère ou un polymère organique l'un ou l'autre ou les deux peuvent présenter des fonctions conductrices et/ou hydrophiles.

Dans le cas où le matériau comprend en outre un agent tensioactif, l'un au moins parmi la phase minérale et l'oligomère ou le polymère organique présente des fonctions conductrices et/ou hydrophiles, ou bien deux quelconques parmi la phase minérale, l'oligomère ou le polymère organique et l'agent tensioactif présentent des fonctions conductrices et/ou hydrophiles, ou bien l'agent tensioactif et la phase minérale et l'oligomère ou le polymère organique présentent tous trois des fonctions conductrices et/ou hydrophiles.

En général, le matériau selon l'invention présente une porosité ouverte servant de réseau de conduction protonique continu. De préférence, le squelette mésoporeux est hygroscopique et possède une fonctionnalité conductrice dans ses pores (il s'agit par exemple d'un oxyde métallique fonctionnalisé) qui assure ainsi le transport des protons et l'hydratation. Le polymère organique ou l'oligomère renforce les murs de la phase minérale et structure celle-ci, ce qui permet au contraire de l'art antérieur de mettre le matériau conducteur sous forme de membrane.

Il se produit une véritable synergie entre la phase minérale et l'oligomère ou le polymère organique, qui communique au matériau selon l'invention une combinaison unique de propriétés physiques, électriques, mécaniques jamais atteintes dans l'art antérieur.

Les fonctions conductrices peuvent être choisies parmi les groupes échangeurs de cations et/ou les groupes échangeurs d'anions.

Les groupes échangeurs de cations peuvent être choisis, par exemple, parmi les groupes suivants : -SO₃M ; -PO₃M₂ ; -COOM et -B(OM)₂, où M représente l'hydrogène, un cation métallique monovalent, ou ⁺NR¹₄, où chaque R¹ représente indépendamment un hydrogène, un radical alkyle ou un radical aryle.

Les groupes échangeurs d'anions peuvent être choisis par exemple parmi les groupes suivants : pyridyle ; imidazolyle ; pyrazolyle ; triazolyle ; les radicaux de formule -⁺NR²₃X⁻, où X représente un anion comme par exemple F, Cl, Br, I, NO₃, SO₄H ou OR (où R représente un radical alkyle ou un radical aryle), et où chaque R² représente indépendamment un hydrogène, un radical alkyle, ou un radical aryle ; et les radicaux basiques aromatiques ou non aromatiques contenant au moins un radical choisi parmi les radicaux imidazole, vinylimidazole, pyrrazole, oxazole, carbazole, indole, isoindole, dihydrooxazole, isooxazole, thiazole, benzothiazole, isothiazole, benzoimidazole, indazole, 4,5-dihydropyrazole, 1,2,3-oxadiazole, furazane, 1,2,3-thiadiazole, 1,2,4-thiadiazole, 1,2,3-benzotriazole, 1,2,4-triazole, tétrazole, pyrrole, aniline, pyrrolidine, et pyrrazole.

La phase minérale est généralement constituée par au moins un oxyde choisi parmi les oxydes de métaux, les oxydes de métalloïdes et les oxydes mixtes de ceux-ci.

Ledit oxyde est généralement choisi parmi les oxydes de silicium, titane, zirconium, hafnium, aluminium, tantale, étain, terres rares ou lanthanides, tels que europium, cérium, lanthane ou gadolinium, et les oxydes mixtes de ceux-ci.

La phase minérale du matériau selon l'invention est une phase mésostructurée, cela signifie, de manière plus précise, que le réseau mésoporeux présente une structure organisée avec un motif de répétition.

Par exemple, le réseau mésoporeux peut présenter une structure cubique, hexagonale, lamellaire, vermiculaire, vésiculaire ou bicontinue.

La taille des pores du réseau mésoporeux est généralement de 1 à 100 nm, de préférence de 1 à 50 nm.

L'oligomère ou le polymère organique intégré dans les murs de la phase minérale doit généralement répondre à un certain nombre de conditions.

Avant tout ledit oligomère ou ledit polymère doit généralement être thermostable ; par thermostable, on entend qu'il garde ses propriétés sous l'action de la chaleur.

Le polymère ou l'oligomère doit généralement, en outre, ne pas être sensible à l'hydrolyse et à l'oxydation à des températures en particulier élevées, notamment aux températures de fonctionnement des piles à combustible et ce pendant plusieurs milliers d'heures.

En outre, généralement le polymère ou l'oligomère choisi doit être :
- soluble en milieu hydroalcoolique, alcoolique ou dans les autres solvants miscibles ou partiellement miscibles à l'eau puisque l'organisation du surfactant éventuel en milieu liquide, agent texturant de la phase mésoporeuse, s'effectue dans des milieux fortement polaires tels que l'eau ;
- plastique, pour apporter suffisamment de tenue à la phase inorganique mésoporeuse et former un film autosupporté, c'est-à-dire que le polymère peut être qualifié de polymère (mécaniquement) structurant.

L'oligomère ou le polymère organique sera généralement choisi parmi les polyéthercétones (PEK, PEEK, PEEKK) ; les polysulfones (PSU), par exemple le Udel^{®} : les polyéthersulfones, par exemple le VITREX^{®}; les polyphényléthersulfones (PPSU), par exemple le Radel^{®} ; les copolymères styrène/éthylène (SES), styrène/butadiène (SBS), styrène/isoprène (SIS), par exemple le KRATON^{®} ; les polyphénylènes, tels que les poly(sulfure de phénylènes) et les poly(oxyde de phénylènes) ; les polyimidazoles, tels que les polybenzimidazoles (PBI) ; les polyimides (PI) ; les polyamideimides (PAI) ; les polyanilines : les polypyrroles ; les polysulfonamides ; les polypyrazoles, tels que les polybenzopyrazoles ; les polyoxazoles, tels que les polybenzoxazoles ; les polyéthers, tels que les poly(oxyde de tétraméthylène) et les poly(oxyde d'hexaméthylène) ; les poly(acide (méth)acryliques) : les polyacrylamides ; les polyvinyles, tels que les poly(esters de vinyle), par exemple les polyvinylacétates, les polyvinylformates, les polyvinylpropionates, les polyvinyllaurates, les polyvinylpalmitates les polyvinylstéarates, les polyvinyltriméthylacétates, les polyvinylchloroacétates, les polyvinyltrichloroacétates, les polyvinyltrifluoroacétates, les polyvinylbenzoates, les polyvinylpivalates, les polyvinylalcools ; les résines acétales, telles que les polyvinylbutyrales ; les polyvinylpyridines ; les polyvinylpyrrolidones ; les polyoléfines, telles que les polyéthylènes, les polypropylènes, les polyisobutylènes ; les poly(oxyde de styrène) ; les résines fluorées et les polyperfluorocarbones, tels que les polytétrafluoroéthylènes (PTFE), par exemple le TEFLON^{®} ; les poly (fluorure de vinylidène) (PVDF) ; les polychlorotrifluoroéthylènes (PCTFE) ; les polyhéxafluoropropènes (HFP) ; les perfluoroalcoxydes (PFA) ; les polyphosphazènes ; les élastomères siliconés ; les copolymères séquencés comprenant au moins une séquence constituée par un polymère choisi parmi les polymères ci-dessus.

Lorsque le matériau comprend une troisième phase, à l'intérieur des pores constituées par un agent tensioactif, ce dernier peut être choisi parmi : les surfactants, tels que les sels d'alkyltriméthylammonium, d'alkylphosphates et d'alkylsulfonates ; les acides comme l'acide dibenzoyltartrique, l'acide maléique ou les acides gras à chaîne longue ; les bases comme l'urée ou les amines à chaîne longue ; les phospholipides ; les copolymères doublement hydrophiles dont l'amphiphilie est générée in situ par interaction avec un substrat ; les copolymères multiblocs amphiphiles comportant au moins un bloc hydrophobe associé à au moins un bloc hydrophile. Parmi ces polymères, on peut citer, par exemple, les Pluronic^{®} à base de PEO(poly(oxyde d'éthylène)) et PPO(poly(oxyde de propylène)) de type (EO)ₙ- (PO)ₘ- (EO)ₙ, les copolymères de type ( (EO)ₙ- (PO)ₘ)ₓ-NCH₂CH₂N- ((EO)ₙ- (PO)ₘ) ₓ (Tetronic^{®}) , la famille Cₙ(EO)ₘ(OH) (Cₙ=chaîne alkyle et/ou aryle, EO=chaine oxyde d'éthylène), par exemple Brij^{®}, Triton^{®} ou Igepal^{®}, et la famille (EO)ₘ-sorbitan-Cₙ(Tween^{®}).

Il est important de noter que le polymère ou oligomère organique ne doit en aucun cas être confondu avec un polymère tensioactif éventuel. Bien que dénommés alors tous deux « polymères », ces composés sont différents aussi bien au niveau de leur structure que de leurs effets. L'oligomère ou polymère organique intégré dans les murs est un polymère qualifié de (mécaniquement) « structurant », tandis que le polymère, tensioactif éventuel est qualifié de « texturant ».

L'invention concerne en outre une membrane comprenant le matériau tel que décrit ci-dessus, éventuellement déposé sur un support.

Par membrane, on entend que le matériau se présente sous la forme d'un film ou feuille d'une épaisseur par exemple de 50 nm à quelques millimètres, de préférence de 10 à 500 µm.

L'invention concerne également une électrode comprenant le matériau tel que décrit ci-dessus.

Les excellentes propriétés du matériau selon l'invention, sous forme d'une membrane et/ou d'une électrode le rendent particulièrement adéquat à une utilisation dans un dispositif électrochimique, par exemple une pile à combustible.

L'invention concerne donc également une pile à combustible comprenant au moins une membrane et/ou une électrode telle que décrite plus haut.

L'invention a également trait à un procédé de préparation du matériau tel que décrit ci-dessus, dans lequel on réalise les étapes suivantes :
a) - on synthétise un composé précurseur A constitué par un oligomère ou un polymère organique portant des fonctions précurseurs de la phase minérale mésoporeuse, et on prépare une solution hybride organique-inorganique dans un solvant dudit composé précurseur A ;
b) - on hydrolyse la solution hybride organique-inorganique obtenue dans l'étape a) et on la laisse mûrir ;
c) - on dilue la solution hybride organique-inorganique du composé précurseur A hydrolysée et mûrie obtenue dans l'étape b), dans une solution dans un solvant d'un précurseur minéral B destiné à constituer la phase minérale mésoporeuse, moyennant quoi, on obtient une nouvelle solution hybride organique-inorganique ;
d) - on hydrolyse la solution hybride organique-inorganique obtenue dans l'étape c) et on la laisse mûrir ;
e) - on prépare une solution dans un solvant d'un agent tensioactif D, texturant de la phase minérale mésoporeuse ;
f) - on mélange la solution obtenue dans l'étape c) à la solution obtenue dans l'étape e) pour obtenir une solution S ;
g) - éventuellement, on hydrolyse la solution S obtenue dans l'étape f) et on la laisse mûrir ;
h) - on dépose ou on imprègne la solution hybride S hydrolysée et mûrie sur un support ;
i) - on réalise une évaporation des solvants dans des conditions contrôlées de pression, de température et d'humidité ;
j) - on effectue un traitement thermique pour réaliser une consolidation du matériau ;
k) - on élimine éventuellement, totalement ou partiellement, le tensioactif D ;
l) - on sépare où on élimine éventuellement le support.

Il est à noter que, lorsque le matériau préparé est sous la forme, notamment d'une pellicule ou couche et qu'il est déposé ou imprégné sur un substrat, par exemple plan, alors le procédé peut être défini comme un procédé de préparation d'une membrane.

Le procédé selon l'invention présente une suite unique d'étapes spécifiques qui permettent une croissance adéquate par voie « sol-gel » de la phase inorganique (minérale) mésoporeuse éventuellement fonctionnalisée dans les pores et intégrant dans ses murs un oligomère ou polymère organique. Les conditions du procédé assurent l'obtention d'un matériau, puis d'une membrane homogène et flexible couplée à la construction de la mésoporosité.

Grâce au procédé de l'invention, la croissance de la phase mésoporeuse éventuellement fonctionnalisée dans ses pores et intégrant dans ses murs un oligomère ou polymère organique est parfaitement maîtrisée, notamment en présence d'un agent tensioactif texturant.

Avantageusement, on ajoute en outre un agent chélatant E à la solution S obtenue dans l'étape f).

Avantageusement, lors de l'étape c), on ajoute en outre à la solution de précurseur minéral A, un composé C porteur d'une part de fonctions conductrices et/ou hydrophiles et/ou de fonctions précurseurs de fonctions conductrices et/ou hydrophiles ainsi que d'autre part de fonctions susceptibles de se lier à la surfaces des pores du réseau mésoporeux. Avantageusement, le procédé comprend en outre une étape finale de traitement pour libérer ou générer des fonctions conductrices et/ou hydrophiles sur la surface des pores du matériau.

Avantageusement, on laisse mûrir la solution hybride organique-inorganique obtenue dans l'étape a) (étape b)) à une température de 0°C à 300°C, de préférence de 20°C à 200C à une pression de 100 Pa à 5.10⁶ Pa, de préférence de 1 000 Pa à 2.10⁵ Pa ; pendant une durée de quelques minutes à quelques jours, de préférence d'une heure à une semaine.

Avantageusement, on laisse mûrir la solution obtenue dans l'étape c) (étape d)) à une température de 0°C à 300°C, de préférence de 20°C à 200°C ; à une pression de 100 Pa à 5.10⁶ Pa ; de préférence de 1 000 Pa à 2.10,⁵ Pa ; pendant une durée de quelques minutes à quelques jours, de préférence d'une heure à une semaine.

Avantageusement, on laisse mûrir la solution S obtenue dans l'étape f) à une température de 0°C à 300°C, de préférence de 20°C à 200°C : à une pression de 100 Pa à 5.10⁶ Pa, de préférence de 1 000 Pa ; à 2.10⁵ Pa, pendant une durée de quelques minutes à quelques jours, de préférence d'une heure à une semaine.

Avantageusement, les solvants sont évaporés à une température de 0 à 300°C, de préférence de 10°C à 160°C ; à une humidité relative (HR) de 0 à 100 %, de préférence de 20 à 95 %. Ces conditions d'évaporation permettent notamment l'obtention d'une membrane homogène et flexible et de la mésoporosité voulue.

Dans l'étape h), le dépôt ou l'imprégnation de la solution hybride organique-inorganique sur un support peut être réalisée par un procédé choisi parmi le procédé de dépôt par enduction centrifuge dit de « spin-coating », le procédé de dépôt par trempage-retrait dit de « dip-coating », le procédé de dépôt par enduction laminaire dit de « meniscus-coating », le procédé de dépôt par pulvérisation dit de « spray-coating », ou le procédé de dépôt par coulée et le procédé de dépôt par évaporation.

L'invention sera mieux comprise à la lecture de la description qui va suivre, donnée à titre illustratif et non limitatif en référence au dessin joint dans lequel :

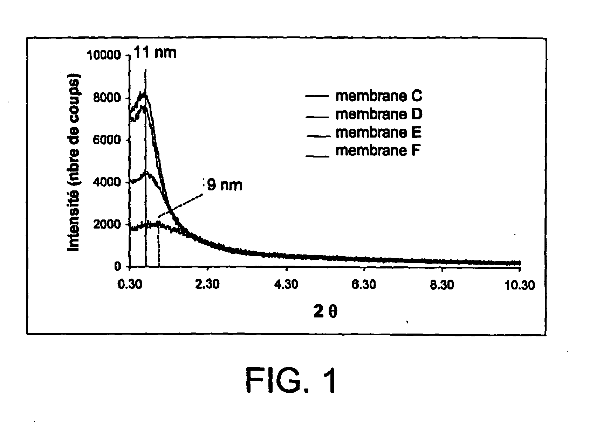

- la figure 1 est un graphique qui donne les diagrammes de diffraction des rayons X aux bas angles pour des membranes C, D, E et F préparées dans l'exemple.

En ordonnée est portée l'intensité (en nombre de coups) et en abscisse est portée 2θ.

Les courbes représentent depuis le haut vers le bas les diagrammes pour respectivement les membranes F, C, D et E.

On décrit dans ce qui suit un procédé de préparation selon l'invention d'un matériau hybride organique-inorganique conducteur sous forme de membrane présentant une phase minérale mésoporeuse dont les murs sont pourvus de chaînons organiques oligomères ou polymériques liés au réseau minéral, une fonction conductrice est présente, par exemple, dans les pores, et un agent tensioactif peut être aussi présent dans ces mêmes pores.

Ce procédé comprend les étapes suivantes :
Etape 1 : La synthèse débute par la préparation du précurseur organométallique A qui va apporter la flexibilité et la tenue mécanique au réseau mésoporeux. Typiquement, une chaîne polymère, ramifiée ou non, est fonctionnalisée par au moins deux fonctions alcoxydes métalliques (RO)ₙM'-Polymère-M'(OR)ₙ où M' est un métalloïde ou un métal tel qu'un métal p ou un métal de transition ou encore un lanthanide. Des exemples de M' sont Si, Ti, Zr, Al, Sn, Ce, Eu, La, Gd, et R est un groupement organique de type alkyle, aryle.
   Le polymère est choisi pour ses propriétés mécaniques (structuration et flexibilité), de résistance thermique, à l'hydrolyse et à l'oxydation du milieu de la pile à combustible. Typiquement ce polymère peut être choisi parmi les polymères décrits plus haut. Ces différents polymères peuvent comprendre des groupements échangeurs de cations : -SO₃M, -PO₃M₂, -COOM, ou -B(OM)₂ (avec M=H, cation de métal monovalent, ou N⁺R¹₄ (avec R¹=H, alkyle, ou aryle) ; ou des précurseurs : SO₂X, COX, ou PO₃X₂ (X=F, Cl, Br, I ou OR (R=alkyle ou aryle)). Dans un autre modèle, les différents polymères peuvent comprendre des groupements échangeurs d'anions : -⁺NR²₃X⁻, où X représente un anion comme par exemple F, Cl, Ber, I, NO₃, SO₄H ou OR, R étant un radical alkyle ou un radical aryle, et ou chaque R² représente indépendamment H, alkyle, aryle, pyridium, imidazolinium, pyrazolium ou sulfonium, on pourra aussi se reporter à la liste donnée plus haut.
Etape 2 : Ce précurseur A est dilué en présence d'un alcoxyde métallique ou sel métallique B en milieu liquide ; et le choix du solvant ou du mélange de solvant est réalisé en fonction du milieu de miscibilité du surfactant utilisé par la suite, typiquement les alcools, les éthers ou cétones miscibles ou partiellement miscibles à l'eau.
   A ce précurseur métallique une quantité molaire C d'un composé organométallique comportant des fonctions hydroxyles ou des fonctions hydrolysables de type alcoxyde, et des fonctions non hydrolysables ou greffées peut être ajoutée en même temps que le mélange (A et B). Ce composé C répond par exemple à la formule R³ₓR⁴_{y}M" OR_{(n-(x+y))}: où M" représente un élément du groupe IV, par exemple : Si, ou à la formule ZR³ₓZR⁴_{y}M"'OR_{(n-(x+y))} : où M'" représente un métal p, un métal de transition, ou un lanthanide par exemple : Ti, Zr, Ta, Al, Sn, Eu, Ce, La, Gd, où n est le degré de valence du métal, Z est une fonction complexante de type monodentate comme acétate, phosphonate, phosphate ou de type bidentate comme les β-dicétones, et leurs dérivés, et les α ou β-hydroxyacides, R³, R⁴, R sont des substituants organiques de type H, alkyles, aryles. Particulièrement pour R³, ces substituants peuvent comporter des groupements échangeurs de cations : -SO₃M, -PO₃M₂, -COOM, ou -B(OM)₂ dans lesquels M=H, un cation métallique monovalent, ou N⁺R¹₄ (où chaque R¹ représente indépendamment H, alkyle, ou aryle) ; ou des précurseurs de groupements échangeurs de cations : SO₂X, COX, ou PO₃X₂ (X=F, Cl, Br, I ou OR (R=alkyl ou aryle) ; ou des groupements échangeurs d'anions, tels que -⁺NR²₃X⁻, ou X représente un anion comme par exemple F, Cl, Br, I, NO₃, SO₄H ou OR, R étant un radical alkyle ou un radical aryle, et chaque R² représente indépendamment H, alkyle, aryle, pyridinium, imidazolinium, pyrazolium ou sulfonium, on pourra également se reporter à la liste donnée plus haut.
Etape 3 : Cette solution est mélangée à une solution de surfactant qui jouera le rôle d'agent texturant. Le choix de l'agent texturant dépend à la fois de la mésostructure souhaitée (cubique, hexagonale, lamellaire, vermiculaire, vésiculaire ou bicontinue), de la taille des pores et des murs de cette mésostructure, et de sa solubilisation avec les autres composés de la présente invention, à savoir les précurseurs minéraux. On utilisera des agents texturants surfactés, comme les sels d'alkyltriméthylammonium, d'alkylphosphates et d'alkylsulfonates ; ou les acides comme l'acide dibenzoyltartrique, maléique, les acides gras à chaîne longue ; ou les bases comme l'urée et les amines à chaîne longue, pour construire des édifices mésoporeux dont la taille des pores se limitent à quelques nanomètres (1,6 à 10nm) et la taille des murs à environ 1nm.
   Pour préparer des phases mésoporeuses de plus grande taille de pores (jusqu'à 50 nm), on utilisera des phospholipides ; des copolymères doublement hydrophiles dont l'amphiphilie est générée in situ par interaction avec un substrat ; ou des copolymères multiblocs amphiphiles comportant au moins un bloc hydrophobe associé à au moins un bloc hydrophile. Parmi ces polymères, on peut citer par exemple les Pluronic^{®} à base de PEO (oxyde de polyéthylène) et PPO (oxyde de polypropylène) de type (EO)ₙ-(PO)ₘ-(EO)ₙ, les copolymères de type ((EO)ₙ-(PO)ₘ)ₓNCH₂CH₂N-((EO)ₙ-(PO)ₘ)ₓ (Tetronic®), la famille Cₙ(EO)ₘ(OH) (Cn=chaîne alkyle et/ou aryle, EO=chaîne oxyde d'éthylène), par exemple Brij®, Triton®, Tergitol® ou Igepal®, et la famille (EO)ₘ-sorbitan-Cₙ (Tween®). Ces différents blocs pourront également être de nature acrylique PMAc (poly(acide méthacrylique) ou PAAc (poly(acide acrylique), aromatique PS *(Polystyrène),* vinylique PQVP (polyvinylpyridine), PVP (polyvinylpyrrolidone), PVEE (polyvinyléther), ou autre PDMS (polysiloxane). Ces différents blocs peuvent être fonctionnalisés par des groupements conducteurs de type échangeurs de cations ; ou des précurseurs de groupements échangeurs de cations ; ou des groupements échangeurs d'anions, comme par exemple PSS (acide poly(styrènesulfonique)) ou des précurseurs de groupements échangeurs d'anions, déjà définis plus haut. L'agent texturant choisi D est dissout ou dilué en milieu hydroalcoolique ou dans un mélange de solvant à base aqueuse compatible avec le milieu de dilution des précurseurs organométalliques A, B et C.
Etape 4 : Cette solution hybride organique-inorganique surfactée est ensuite hydrolysée en milieu acide ou basique durant un temps déterminé qui peut s'étendre de quelques heures à plusieurs jours en fonction du choix du précurseur métallique et ce à température contrôlée de l'ambiante au reflux. Notamment dans le cas de précurseurs de TiO₂ ou de ZrO₂, un agent chélatant E, comme typiquement l'acétylacétone ou l'acide acétique ou les phosphonates, peut être introduit pour contrôler l'hydrolyse-condensation du réseau inorganique.
Etape 5 : La membrane est réalisée par dépôt de la solution hybride organique-inorganique et évaporation sous pression, température et humidité contrôlées (15°C<T<80°C). Les conditions d'évaporation sont très importantes pour l'organisation du surfactant en milieu liquide, la formation finale du réseau mésoporeux. Les membranes obtenues sont ensuite traitées thermiquement entre 50°C et 300°C pour obtenir la consolidation. Le surfactant présent dans les mésopores de la membrane peut-être éliminé par une méthode douce comme par exemple un lavage en milieu hydroalcoolique acide. Une post-réaction pour libérer ou générer la fonction conductrice liée au réseau inorganique peut être réalisée. Typiquement ce type de post-réaction peut être :
   - une oxydation d'un groupement mercaptan (-SH) par l'eau oxygénée en acide sulfonique SO₃H ou,
   - l'hydrolyse d'une fonction dialkylphosphonate (RO)₂(O)P- par HCl directement ou via la formation d'un intermédiaire (Me₃SiO)₂(O)P- puis hydrolyse par le MeOH pour former un acide phosphonique -PO₃H₂.

Cette post-réaction peut également correspondre à un greffage des hydroxyles M-OH de surface du réseau inorganique de la membrane par un organoalcoxyde métallique. Dans tous ces cas la membrane est placée en milieu liquide pour permettre son gonflement et la diffusion des entités moléculaires réactives dans les pores de la membrane.

Afin d'éviter toute réaction parasite au sein de la membrane lors du fonctionnement de la pile, la membrane conductrice de protons est purifiée par différents lavages oxydants, acides (ou basiques) et aqueux qui permettent d'éliminer toutes les entités organiques, organominérales ou inorganiques labiles.

Dans le procédé selon l'invention, la croissance de la phase mésoporeuse intégrant dans ses murs un oligomère ou un polymère organique est parfaitement maîtrisée en présence d'un agent tensioactif texturant. Cette maîtrise est liée notamment au choix judicieux des solvants, tels que alcools, éthers, cétones, miscibles ou partiellement miscibles à l'eau, des précurseurs et des conditions opératoires détaillées plus haut.

La membrane peut-être préparée également sous forme de film autosupporté en utilisant des méthodes de dépôt en voie liquide, à savoir l'enduction centrifuge (spin-coating), le trempage-retrait (dip-coating) ou l'enduction laminaire (meniscus-coating). Ce film formé est ensuite décollé de son support par gonflement dans un solvant tel que l'eau.

La technique de pulvérisation dite de « spray-coating » peut être aussi utilisée pour former des aérosols à partir de la solution hybride organique-inorganique et ainsi réalisé l'imprégnation des électrodes afin notamment d'améliorer la compatibilité électrode-membrane lors du montage en pile.

L'invention va maintenant être décrite en référence à l'exemple suivant donné à titre illustratif et non limitatif.

### EXEMPLE :

Dans cet exemple, on prépare une membrane hybride à base d'un réseau continu de silice-poly(oxyde de propylène).

Le tétraéthoxysilane (TEOS) et le 3-mercaptopropyltriméthoxysilane porteur d'une fonction -SH précurseur d'un groupement acide SO₃H sont dilués dans un solvant alcoolique à 3% massique. Le surfactant (Brij^{®}30) est ensuite ajouté au mélange et la solution est hydrolysée par l'acide chlorhydrique à 0,2 M. Une solution de polymère poly(oxyde de propylène) organosilicé diluée à 3% dans le même solvant est additionnée.

Après homogénéisation et mûrissement de la solution hybride 12 heures, la solution est évaporée dans une boîte de Pétri pour former une membrane homogène et flexible de 150 µm.

On fait varier trois paramètres dans cette préparation :
- le taux massique [SiO_{2-ORMOSIL}/polymère-*_{SiO2}*]
- la nature du solvant alcoolique (éthanol, propanol, méthanol et THF)
- le type de fonctionnalisation de la silice, SiO₂-SH ou SiO₂-SO₂H par l'ajout ou non d'eau oxygénée.

Le tableau 1 donne les différentes formulations préparées :

**Tableau 1**

| **Nom** | **Tx_{massique}** **SiO₂/Polymère** | **Rapport molaire** **(R-Si/TEOS)** | **Solvant** | **Rapport** **molaire** **(H₂O₂/R-SiO₂)l** |
|---|---|---|---|---|
| A | 60% | 0.3 | C₂H₅OH | 0.4 |
| B | 50% | 0.3 | C₂H₅OH | 0.4 |
| C | 40% | 0.3 | C₂H₅OH | 0.4 |
| D | 30% | 0.3 | C₂H₅OH | 0.4 |
| E | 20% | 0.3 | C₂H₅OH | 0.4 |
| F | 0% | 0.0 | C₂H₅OH | 0.4 |
| G | 40% | 0.3 | i-C₃H₇OH | 0.4 |
| H | 40% | 0.3 | C₄H₆O | 0.4 |
| I | 40% | 0.3 | CH₃OH | 0.4 |
| J | 30% | 0.3 | C₂H₅OH | O |
| K | 30% | 0.3 | C₂H₅OH | 0.4 (reflux) |
| L | 30% | 0.3 | C₂H₅OH | 1.1 (reflux |

Ces différentes formulations donnent dans tous les cas des membranes transparentes.

### 1) Etude du taux massique silice/polymère dans la membrane :

Les membranes C à F forment des films auto-supportés et sont flexibles. La flexibilité des membranes est assurée pour un taux de silice élevé compris entre 30 et 40%.

**Tableau 2**

| **Nom** | **Tx_{massique}** **SiO₂/Polymère** | **Caractéristique de la membrane** |
|---|---|---|
| A | 60% | Membrane cassante |
| B | 50% | Membrane rigide |
| C | 40% | Membrane semi-rigide |
| D | 30% | Membrane flexible |
| E | 20% | Membrane flexible |
| F | 0% | Membrane flexible |

Les diagrammes de diffraction aux rayons X aux bas angles de ces membranes mettent en évidence une organisation mésoporeuse avec un pic de diffraction centré sur 11 nm (voir figure 1 où les courbes depuis le haut vers le bas donnent respectivement les diagrammes pour les membranes F, C, D et E).

### 2) Etude de la nature du solvant :

Les membranes A et B forment des films auto-supportés plus flexibles que les membranes C et D. Pour un taux de silice élevé de 40%, on observe une flexibilité différente selon la nature du solvant, ce qui indique une structure macroscopique de membranes différente.

**Tableau 3**

| **Nom** | **Solvant** | **Caractéristique de la membrane** |
|---|---|---|
| C | EtOH | Membrane semi-rigide |
| G | IPrOH | Membrane flexible |
| H | THF | Membrane rigide |
| I | McOH | Membrane rigide |

### 3) Etude de la fonctionnalisation de la silice, SiO₂-SH ou SiO₂-SO₃H par l'ajout ou non d'eau oxygénée :

L'ajout d'eau oxygénée pour oxyder les fonctions SH ou SO₃H ne diminue pas la flexibilité des membranes.

**Tableau 4**

| **Nom** | **Rapport molaire** **(H₂O₂/R-SiO₂)** | **Caractéristique de la membrane** |
|---|---|---|
| C | 0.4 | Membrane flexible |
| J | 0.4 (reflux) | Membrane flexible |
| K | 1.1 (reflux) | Membrane flexible |

Le tableau 5 donne les valseurs de capacité d'échange ionique et de conductivité de ces membranes.

**Tableau 5**

| Nom | Rapport molaire | CEI_{dosée} | CEI_{théorique} | Conductivité |
|---|---|---|---|---|
| | (H₂O₂/R-SiO₂) | (méq H⁺.g⁻¹) | (méq H⁺,g⁻¹) | (S.cm⁻¹) |
| C | 0.4 | 0,39 | 1.15 | 2,26x10⁻⁵ |
| J | 0.4 (reflux) | 0,39 | 1.15 | 5,34 x 10⁻⁵ |
| K | 1.1 (reflux) | 1,05 | 1.15 | 5,68 x 10⁻⁴ |

Dans le cas d'un taux molaire d'eau oxygénée de 0,4, on observe peu d'échanges ioniques et une conductivité faible. Ce résultat démontre que le rendement d'oxydation des liaisons SH et SO₃H est faible. L'augmentation de la quantité d'eau oxygénée d'un facteur 3 permet d'augmenter la conductivité d'un facteur 10.

### BIBLIOGRAPHIE

(1) G. Alberti and M. Casciola Solid state protonic conductors, present main applications and future prospects, Solid State Ionics 2001, 145, 3-16.
(2) B. Bonnet, D. J. Jones, J. Roziere, L. Tchicaya, G. Alberti, M. Casciola, L. Massinelli, B. Bauer, A. Peraio and E. Ramunni Hybrid organic-inorganic membranes for a medium temperature fuel cell, Journal of New Materials for Electrochemical Systems 2000, 3, 87-92.
(3) P. Genova-Dimitrova, B. Baradie, D. Foscallo, C. Poinsignon and J. Y. Sanchez Ionomeric membranes for proton exchange membrane fuel cell (PEMFC): sulfonated polysulfone associated with phosphatoantimonic acid, Journal of Membrane Science 2001, 185, 59-71.
(4) N. Miyake, J. S. Wainright and R. F. Savinell Evaluation of a sol-gel derived Nafion/silica hybrid membrane for proton electrolyte membrane fuel cell applications - I. Proton conductivity and water content, Journal of the Electrochemical Society 2001, 148, A898-A904.
(5) C. Yang, S. Srinivasan, A. S. Arico, P. Creti, V. Baglio and V. Antonucci Composition Nafion/zirconium phosphate membranes for direct methanol fuel cell operation at high temperature, Electrochemical & Solid-State Letters 2001, 4, A31-A34.
(6) J. M. Fenton, H. R. Kunz and J.-C. Lin, Improved membrane electrode assemblies using ionic composite membranes for fuel cells, 2002, WO0223646
(7) O. J. Murphy and A. J. Cisar ,Composite membrane suitable for use in electrochemical devices, 2000, WO00063995.
(8) K. T. Adjemian, S. J. Lee, S. Srinivasan, J. Benziger and A. B. Bocarsly Silicon oxide Nafion composite membranes for proton-exchange membrane fuel cell operation at 80-140 degrees C, Journal of the Electrochemical Society 2002, 149, A256-A261.
(9) B. Baradie, J. P. Dodelet and D. Guay Hybrid Nafion (R)-inorganic membrane with potential applications for polymer electrolyte fuel cells, Journal of Electroanalytical Chemistry 2000, 489, 101-105.
(10) M. A. Harmer, Q. Sun, A. J. Vega, W. E. Farneth, A. Heidekum and W. F. Hoelderich Nafion resin-silica nanocomposite solid acid catalysts. Microstructure-processing-property correlations, Green Chemistry 2000, 2, 7-14.
(11) D. J. Jones and J. Roziere Recent advances in the functionalisation of polybenzimidazole and polyetherketone for fuel cell applications, Journal of Membrane Science 2001, 185, 41-58.
(12) K. A. Mauritz and J. T. Payne [Perfluorosulfonate ionomer]/silicate hybrid membranes via base-catalyzed in situ sol-gel process for tetraethylorthosilicate, Journal of Membrane Science 2000, 168, 39-51.
(13) S. P. Nunes and R. A. Zoppi Electrochemical impedance studies of hybrids of perfluorosulfonic acid ionomer and silicon oxide by sol-gel reaction from solution, Journal of Electroanalytical Chemistry 1998, 445, 39-45.
(14) E. Peled, T. Duvdevani, A. Melman and A. Aharon ,Fuel Cell with proton conducting membrane, 2001, WO 0154216.
(15) P. Staiti Proton conductive membranes constituted of silicotungstic acid anchored to silica-polybenzimidazole matrices, Journal of New Materials for Electrochemical Systems 2001, 4, 181-186.
(16) H. T. Wang, B. A. Holmberg, L. M. Huang, Z. B. Wang, A. Mitra, J. M. Norbeck and Y. S. Yan Nafion-bifunctional silica composite proton conductive membranes, Journal of Materials Chemistry 2002, 12, 834-837.
(17) M. Watanabe and P. Stonehart ,Polymer solid-electrolyte composition and electrochemical cell using the composition, 1996, US5523181.
(18) J. Kerres, G. Schafer and N. Nicoloso, Proton-conducting ceramic/polymer membrane for range up to 300 C, 2002, US02093008.
(19) J. Roziere, D. Jones, L. Tchicaya Boukary and B. Bauer ,Matériau hybride, utilisation dudit materiau hybride et procede de sa fabrication, 2000, WO 0205370.
(20) I. Honma ,Hight temperature proton conductive organic-inorganic composite membranes and their manufacture, 2000, JP00090946.
(21) U. L. Stangar, N. Groselj, B. Orel, A. Schmitz and P. Colomban Proton-conducting sol-gel hybrids containing heteropoly acids, Solid State Ionics 2001, 145, 109-118.
(22) Y. Park and M. Nagai Proton exchange nanocomposite membranes based on 3-glycidoxypropyltrimethoxysilane, silicotungstic acid and alpha-zirconium phosphate hydrate, Solid State Ionics 2001, 145, 149-160.
(23) F. M. Vichi, M. T. Colomer and M. A. Anderson Nanopore ceramic membranes as novel electrolytes for proton exchange membranes, Electrochemical & Solid-State Letters 1999, 2, 313-316.
(24) M. T. Colomer and M. A. Anderson High porosity silica xerogels prepared by a particulate sol-gel route: pore structure and proton conductivity, Journal of Non-Crystalline Solids 2001, 290, 93-104.
(25) A. Sayari and S. Hamoudi Periodic mesoporous silica-based organic - Inorganic nanocomposite materials, Chemistry of Materials 2001, 13, 3151-3168.
(26) A. Matsuda, Y. Nono, T. Kanzaki, K. Tadanaga, M. Tatsumisago and T. Minami Proton conductivity of acid-impregnated mesoporous silica gels prepared using surfactants as a template, Solid State Ionics 2001, 145, 135-140.
(27) S. Nishiwaki, K. Tadanaga, M. Tatsumisago and T. Minami Preparation and proton conductivity of surfactant-templated mesoporous silica gels impregnated with protonic acids, Journal of the American Ceramic Society 2000, 83, 3004-3008.
(28) A. Matsuda, T. Kanzaki, K. Tadanaga, T. Kogure, M. Tatsumisago and T. Minami Sol-gel derived porous silica gels impregnated with sulfuric acid - Pore structure and proton conductivities at medium temperatures, Journal of the Electrochemical Society 2002, 149, E292-E297.
(29) I. Diaz, C. Marquez-Alvarez, F. Mohino, J. Perez-Pariente and E. Sastre A novel synthesis route of well ordered, sulfur-bearing MCM-41 catalysts involving mixtures of neutral and cationic surfactants, Microporous & Mesoporous Materials 2001, 44, 295-302.
(30) D. Margolese, J. A. Melero, S. C. Christiansen, B. F. Chmelka and G. D. Stucky Direct syntheses of ordered SBA-15 mesoporous silica containing sulfonic acid groups, Chemistry of Materials 2000, 12, 2448-2459.
(31) M. H. Lim, C. F. Blanford and A. Stein Synthesis of ordered microporous silicates with organosulfur surface groups and their applications as solid acid catalysts, Chemistry of Materials 1998, 10, 467-+.
(32) R. J. P. Corriu, L. Datas, Y. Guari, A. Mehdi, C. Reye and C. Thieuleux Ordered SBA-15 mesoporous silica containing phosphonic acid groups prepared by a direct synthetic approach, Chemical Communications 2001, 763-764.
(33) S. Mikhailenko, D. Desplantier-Giscard, C. Danumah and S. Kaliaguine Solid electrolyte properties of sulfonic acid functionalized mesostructured porous silica, Microporous & Mesoporous Materials 2002, 52, 29-37.
(34) Q. W. Feng, J. G. Xu, H. Dong, S. X. Li and Y. Wei, Synthesis of polystyrene-silica hybrid mesoporous materials via the nonsurfactant-templated sol-gel process, Journal of Materials Chemistry 2000, 10, 2490-2494.
(35) M. R. Minke, D. A. Loy and K. J. Shea, Surface area and porosity engineering of alkylene-bridged methoxysilanes ; American Chemical Society, Washington, D. C. : Chicago, US, 2001.
(36) B. J. Melde, B. T. Holland, C. F. Blanford and A. Stein, Mesoporous sieves with unified hybrid inorganic/organic frameworks, Chemistry of Materials 1999, 11, 3302-3308.
(37) GJD. Soler-illia, C. Sanchez, B. Lebeau, J. Patarin. Chemical strategies to design textured materials : From microporous and mesoporous oxides to nanonetworks and hierarchical structures, Chemical Reviews, 102(11) : 4093-4138, 2002 Nov.

## Revendications

1. Matériau hybride organique-inorganique conducteur comprenant une phase minérale dans laquelle des murs délimitent des pores formant un réseau mésoporeux structuré à porosité ouverte ; ledit matériau comprenant en outre un oligomère ou un polymère organique intégré dans lesdits murs et lié par covalence à la phase minérale, et éventuellement une autre phase à l'intérieur des pores, constituée par au moins un agent tensioactif ; au moins un parmi la phase minérale et l'oligomère ou le polymère organique présentant des fonctions conductrices et/ou hydrophiles.

2. Matériau selon la revendications 1, dans lequel la phase minérale présente des fonctions conductrices et/ou hydrophiles sur la surface de ses pores.

3. Matériau selon l'une quelconque des revendications précédentes, dans lequel l'oligomère ou le polymère organique présente des fonctions conductrices et/ou hydrophiles.

4. Matériau selon l'une quelconque des revendications 1 à 3, dans lequel la phase éventuelle constituée par au moins un agent tensioactif présente des fonctions conductrices et/ou hydrophiles.

5. Matériau selon l'une quelconque des revendications 1 à 4, dans lequel lesdites fonctions conductrices sont choisies parmi les groupes échangeurs de cations.

6. Matériau selon la revendication 5, dans lequel lesdits groupes échangeurs de cations sont choisis parmi les groupes suivants : SO₃M ; -PO₃M₂ ; -COOM et B(OM)₂, où M représente l'hydrogène, un cation métallique monovalent, ou ⁺NR¹₄, où chaque R¹ représente indépendamment un hydrogène, un radical alkyle ou un radical aryle.

7. Matériau selon l'une quelconque des revendications 1 à 4, dans lequel lesdites fonctions conductrices sont choisies parmi les groupes échangeurs d'anions.

8. Matériau selon la revendication 7, dans lequel lesdits groupes échangeurs d'anions sont choisis parmi les groupes suivants : pyridyle, imidazolyle, pyrazolyle ; triazolyle ; les radicaux de formule, -⁺NR²₃X⁻, où X représente un anion comme par exemple F, Cl, Br, I, NO₃, SO₄H ou OR, R étant un radical alkyle ou un radical aryle, et où chaque R² représente indépendamment un hydrogène, un radical alkyle, ou un radical aryle ; et les radicaux basiques aromatiques ou non aromatiques contenant au moins un radical choisi parmi les radicaux imidazole, vinylimidazole, pyrrazole, oxazole, carbazole, indole, isoindole, dihydrooxazole, isooxazole, thiazole, benzothiazole, isothiazole, benzoimidazole, indazole, 4,5-dihydropyrazole, 1,2,3-oxadiazole, furazane, 1,2,3-thiadiazole, 1,2,4-thiadiazole, 1,2,3-benzotriazole, 1,2,4-triazole, tetrazole, pyrrole, aniline, pyrrolidine, et pyrrazole.

9. Matériau selon l'une quelconque des revendications précédentes, dans lequel la phase minérale est constituée par au moins un oxyde choisi parmi les oxydes de métaux, les oxydes de métalloïdes, et les oxydes mixtes de ceux-ci.

10. Matériau selon la revendication 9, dans lequel ledit oxyde est choisi parmi les oxydes de silicium, titane, zirconium, hafnium, aluminium, tantale, étain, terres rares telles que europium, cérium, lanthane et gadolinium, et les oxydes mixtes de ceux-ci.

11. Matériau selon l'une quelconque des revendications précédentes, dans lequel le réseau mésoporeux présente une structure organisée avec un motif de répétition.

12. Matériau selon la revendication 11, dans lequel le réseau mésoporeux présente une structure cubique, hexagonale, lamellaire, vermiculaire, vésiculaire ou bicontinue.

13. Matériau selon l'une quelconque des revendications précédentes, dans lequel la taille des pores est de 1 à 100 nm, de préférence de 1 à 50 nm.

14. Matériau selon l'une quelconque des revendications précédentes, dans lequel le polymère organique est un polymère thermostable.

15. Matériau selon la revendication 14, dans lequel le polymère organique est choisi parmi les polyéthercétones (PEK, PEEK, PEEKK) ; les polysulfones (PSU) ; les polyéthersulfones ; les polyphényléthersulfones (PPSU) ; les copolymères styrène/éthylène (SES), styrène/butadiène (SBS), styrène/isoprène (SIS) ; les polyphénylènes, tels que les poly(sulfure de phénylènes) et les poly(oxyde de phénylènes) ; les polyimidazoles, tels que les polybenzimidazoles (PBI) ; les polyimides (PI) ; les polyamideimides (PAI) ; les polyanilines ; les polypyrroles ; les polysulfonamides ; les polypyrazoles, tels que les polybenzopyrazoles ; les polyoxazoles, tels que les polybenzoxazoles ; les polyéthers, tels que les poly(oxyde de tétraméthylène) et les poly(oxyde d'hexaméthylènes) ; les poly(acide (méth)acryliques) ; les polyacrylamides ; les polyvinyles, tels que les poly(esters de vinyle), par exemple les polyvinylacétates, les polyvinylformates, les polyvinylpropionates, les polyvinyllaurates, les polyvinylpalmitates, les polyvinylstéarates, les polyvinyltriméthylacétates, les polyvinylchloroacétates, les polyvinyltrichloroacétates, les polyvinyltrifluoroacétates, les polyvinylbenzoates, les polyvinylpivalates, les polyvinylalcools ; les résines acétales, telles que les polyvinylbutyrales ; les polyvinylpyridines ; les polyvinylpyrrolidones ; les polyoléfines, telles que les polyéthylènes, les polypropylènes, les polyisobutylènes ; les poly(oxyde de styrène) ; les résines fluorées et les polyperfluorocarbones, tels que les polytétrafluoroéthylènes (PTFE) ; les poly(fluorure de vinylidènes) (PVDF) ; les polychlorotrifluoroéthylènes (PCTFE) ; les polyhexafluoropropènes (HFP) ; les perfluoroalcoxydes (PFA) ; les polyphosphazènes ; les élastomères siliconés ; les copolymères séquencés comprenant au moins une séquence constituée par un polymère choisi parmi les polymères ci-dessus.

16. Matériau selon l'une quelconque des revendications précédentes, dans lequel l'agent tensioactif est choisi parmi : les surfactants, tels que les sels d'alkyltriméthylammonium, d'alkylphosphates et d'alkylsulfonates ; les acides comme l'acide dibenzoyltartrique, l'acide maléique, les acides gras à chaîne longue, ; les bases comme l'urée et les amines à chaîne longue ; les phospholipides ; les copolymères doublement hydrophiles dont l'amphiphilie est générée in situ par interaction avec un substrat ; les copolymères multiblocs amphiphiles comportant au moins un bloc hydrophobe associé à au moins un bloc hydrophile.

17. Membrane comprenant le matériau selon l'une quelconque des revendications précédentes, éventuellement déposé sur un support.

18. Electrode comprenant le matériau selon l'une quelconque des revendications 1 à 16.

19. Pile à combustible comprenant au moins une membrane selon la revendication 17 et/ou au moins une électrode selon la revendication 18.

20. Procédé de préparation du matériau selon l'une quelconque des revendications 1 à 16, dans lequel on réalise les étapes suivantes :
a) - on synthétise un composé précurseur A constitué par un oligomère ou un polymère organique portant des fonctions précurseurs de la phase minérale mésoporeuse, et on prépare une solution hybride organique-inorganique dans un solvant dudit composé précurseur A ;
b) - on hydrolyse la solution hybride organique-inorganique obtenue dans l'étape a) et on la laisse mûrir ;
c) - on dilue la solution hybride organique-inorganique du composé précurseur A hydrolysée et mûrie obtenue dans l'étape b) dans une solution dans un solvant d'un précurseur minéral B destiné à constituer la phase minérale mésoporeuse, moyennant quoi, on obtient une nouvelle solution hybride organique-inorganique ;
d) - on hydrolyse la solution hybride organique-inorganique obtenue dans l'étape c) et on la laisse mûrir ;
e) - on prépare une solution dans un solvant d'un agent tensioactif D texturant de la phase minérale mésoporeuse ;
f) - on mélange la solution obtenue dans l'étape c) à la solution obtenue dans l'étape e) pour obtenir une solution S ;
g) - éventuellement, on hydrolyse la solution S obtenue dans l'étape f) et on la laisse mûrir ;
h) - on dépose ou on imprègne la solution hybride S hydrolysée et mûrie sur un support ;
i) - on réalise une évaporation des solvants dans des conditions contrôlées de pression, de température et d'humidité ;
j) - on effectue un traitement thermique pour réaliser une consolidation du matériau ;
k) - on élimine éventuellement, totalement ou partiellement, le tensioactif D ;
l) - on sépare où on élimine éventuellement le support.

21. Procédé selon la revendication 20, dans lequel on ajoute en outre un agent chélatant E à la solution S obtenue dans l'étape f).

22. Procédé selon l'une quelconque des revendications 20 et 21, dans lequel lors de l'étape c) on ajoute en outre à la solution à base du précurseur organominéral A, un composé C, porteur d'une part de fonctions conductrices et/ou hydrophiles et/ou de fonctions précurseurs de fonctions conductrices et/ou hydrophiles, et d'autre part de fonctions susceptibles de se lier à la surface des pores du réseau mésoporeux.

23. Procédé selon l'une quelconque des revendications 20 à 22, dans lequel le procédé comprend en outre une étape finale de traitement pour libérer ou générer des fonctions conductrices et/ou hydrophiles sur la surface des pores du matériau.

24. Procédé selon l'une quelconque des revendications 20 à 23, dans lequel on laisse mûrir la solution hybride organique-inorganique obtenue dans l'étape a) à une température de 0 à 300°C, de préférence de 20°C à 200°C ; à une pression de 100 Pa à 5.10⁶ Pa, de préférence de 1 000 Pa à 2.10⁵ Pa ; pendant une durée de quelques minutes à quelques jours, de préférence d'une heure à une semaine.

25. Procédé selon l'une quelconque des revendications 20 à 24, dans lequel on laisse mûrir la solution hybride organique-inorganique obtenue dans l'étape c) à une température de 0 à 300°C, de préférence de 20°C à 200°C ; à une pression de 100 Pa à 5.10⁶ Pa, de préférence de 1 000 Pa à 2.10⁵ Pa ; pendant une durée de quelques minutes à quelques jours, de préférence d'une heure à une semaine.

26. Procédé selon l'une quelconque des revendications 20 à 25, dans lequel on laisse mûrir la solution S obtenue dans l'étape f) à une température de 0 à 300°C, de préférence de 20°C à 200°C ; à une pression de 100 Pa à 5.10⁶ Pa, de préférence de 1 000 Pa à 2.10⁵ Pa ; pendant une durée de quelques minutes à quelques jours, de préférence d'une heure à une semaine.

27. Procédé selon l'une quelconque des revendications 20 à 26, dans lequel on évapore les solvants à une température de 0 à 300°C, de préférence de 10°C à 160°C ; à une humidité relative (HR) de 0 à 100 %, de préférence de 20 à 95 %.

28. Procédé selon l'une quelconque des revendications 20 à 27, dans lequel dans l'étape h) le dépôt ou l'imprégnation de la solution hybride organique-inorganique sur un support est réalisée par un procédé choisi parmi le procédé de dépôt par enduction centrifuge dit de « spin-coating », le procédé de dépôt par trempage-retrait dit de « dip-coating », le procédé de dépôt par enduction laminaire dit de « meniscus-coating », le procédé de dépôt par pulvérisation dit de « spray-coating », le procédé de dépôt par coulée et le procédé de dépôt par évaporation.

## Claims

1. A conductive organic-inorganic hybrid material comprising a mineral phase in which walls define pores forming a structured mesoporous network with open porosity; said material further comprising an organic oligomer or polymer integrated in said walls and covalently bonded to the mineral phase, and optionally another phase inside the pores, composed of at least one surface active agent ; at least one of the mineral phase, and the organic oligomer or polymer having conductive and/or hydrophilic functions.

2. The material according to claim 1, wherein the mineral phase has conductive and/or hydrophilic functions on the surface of its pores.

3. The material of any one of the preceding claims, wherein the organic oligomer or polymer has conductive and/or hydrophilic functions.

4. The material of any one of claims 1 to 3, wherein the optional phase composed of at least one surface active agent has conductive and/or hydrophilic functions.

5. The material of any one of claims 1 to 4, wherein said conductive functions are selected from cation exchange groups.

6. The material of claim 5, wherein said cation exchange groups are selected from the following groups: SO₃M; -PO₃M₂; -COOM and B(OM)₂, where M represents hydrogen, a monovalent metal cation, or ⁺NR¹₄, where each R¹, independently, represents a hydrogen, an alkyl radical or an aryl radical.

7. The material of any one of claims 1 to 4, wherein said conductive functions are selected from anion exchange groups.

8. The material of claim 7, wherein said anion exchange groups are selected from the following groups: pyridyl, imidazolyl, pyrazolyl; triazolyl; the radicals of formula ⁺NR²₃X⁻, where X represents an anion such as, for example, F, Cl, Br, I, NO₃, SO₄H or OR, R being an alkyl radical or an aryl radical, and where each R², independently, represents a hydrogen, an alkyl radical or an aryl radical; and the basic aromatic or nonaromatic radicals containing at least one radical selected from imidazole, vinylimidazole, pyrazole, oxazole, carbazole, indole, isoindole, dihydrooxazole, isoxazole, thiazole, benzothiazole, isothiazole, benzimidazole, indazole, 4,5-dihydropyrazole, 1,2,3-oxadiazole, furazan, 1,2,3-thiadiazole, 1,2,4-thiadiazole, 1,2,3-benzotriazole, 1,2,4-triazole, tetrazole, pyrrole, aniline, pyrrolidine, and pyrazole radicals.

9. The material of any one of the preceding claims, wherein the mineral phase is composed of at least one oxide selected from metal oxides, metalloid oxides and mixed oxides thereof.

10. The material of claim 9, wherein said oxide is selected from the oxides of silicon, titanium, zirconium, hafnium, aluminum, tantalum, tin, rare earths such as europium, cerium, lanthanum, and gadolinium, and mixed oxides thereof.

11. The material of any one of the preceding claims, wherein the mesoporous network has an organized structure with a repeating unit.

12. The material of claim 11, wherein the mesoporous network has a cubic, hexagonal, lamellar, vermicular, vesicular or bicontinuous structure.

13. The material of any one of the preceding claims, wherein the size of the pores is from 1 to 100 nm, preferably from 1 to 50 nm.

14. The material of any one of the preceding claims, wherein the organic polymer is a thermally stable polymer.

15. The material of claim 14, wherein the organic polymer is selected from polyetherketones (PEK, PEEK, PEEKK); polysulfones (PSU); polyethersulfones; polyphenylethersulfones (PPSU); styrene/ethylene (SES), styrene/butadiene (SBS), and styrene/isoprene (SIS) copolymers; polyphenylenes, such as poly(phenylene sulfide)s and poly(phenylene oxide)s; polyimidazoles, such as polybenzimidazoles (PBI) ; polyimides (PI); polyamideimides (PAI); polyanilines; polypyrroles; polysulfonamides; polypyrazoles, such as polybenzopyrazoles; polyoxazoles, such as polybenzoxazoles; polyethers, such as poly(tetramethylene oxide)s and poly(hexamethylene oxide)s; poly((meth)acrylic acid)s; polyacrylamides; polyvinyls, such as poly(vinyl ester)s, for example, polyvinyl acetates, polyvinyl formates, polyvinyl propionates, polyvinyl laurates, polyvinyl palmitates, polyvinyl stearates, polyvinyl trimethylacetates, polyvinyl chloroacetates, polyvinyl trichloroacetates, polyvinyl trifluoroacetates, polyvinyl benzoates, polyvinyl pivalates, and polyvinyl alcohols; acetal resins, such as polyvinyl butyrals; polyvinylpyridines; polyvihylpyrrolidones; polyolefins, such as polyethylenes, polypropylenes, and polyisobutylenes; poly(styrene oxide)s; fluoro resins and polyperfluorocarbons, such as polytetrafluoroethylenes (PTFE); poly(vinylidene fluoride)s (PVDF); polychlorotrifluoroethylenes (PCTFE); polyhexafluoropropenes (HFP); perfluoroalkoxides (PFA); polyphosphazenes; silicone elastomers; and block copolymers comprising at least one block composed of a polymer selected from the above polymers.

16. The material of any one of the preceding claims, wherein the surface active agent is selected from: surfactants such as alkyltrimethylammonium salts, alkyl phosphate salts and alkylsulfonate salts; acids such as dibenzoyltartaric acid, maleic acid or long-chain fatty acids; bases such as urea or long-chain amines; phospholipids; doubly hydrophilic copolymers whose amphiphilicity is generated in situ by interaction with a substrate; and amphiphilic multiblock copolymers comprising at least one hydrophobic block in combination with at least one hydrophilic block.

17. A membrane comprising the material of any one of the preceding claims, optionally deposited on a support.

18. An electrode comprising the material of any one of claims 1 to 16.

19. A fuel cell comprising at least one membrane of claim 17 and/or at least one electrode of claim 18.

20. A process for preparing the material of any one of claims 1 to 16, wherein the following steps are carried out:
a) - a precursor compound A is synthesized, composed of an organic oligomer or polymer which carries precursor functions of the mesoporous mineral phase, and an organic-inorganic hybrid solution is prepared in a solvent of said precursor compound A;
b) - the organic-inorganic hybrid solution obtained in step a) is hydrolyzed and allowed to age;
c) - the hydrolyzed and aged organic-inorganic hybrid solution of the precursor compound A, obtained in step b), is diluted in a solvent of a mineral precursor B intended to constitute the mesoporous mineral phase, whereby a new organic-inorganic hybrid solution is obtained ;
d) - the organic-inorganic hybrid solution obtained in step c) is hydrolyzed and allowed to age;
e) - a solution is prepared, in a solvent, of a surface active agent D, which is a texturizing agent for the mesoporous mineral phase;
f) - the solution obtained in step c) is mixed with the solution obtained in step e) to give a solution S;
g) - optionally, the solution S obtained in step f) is hydrolyzed and allowed to age;
h) - the hydrolyzed and aged hybrid solution S is deposited or impregnated on a support;
i) - solvents are evaporated under controlled pressure, temperature, and humidity conditions;
j) - a heat treatment is carried out to consolidate the material;
k) - the surface active agent D is optionally removed completely or partially;
l) - the support is optionally separated or removed.

21. The process of claim 23, wherein additionally a chelating agent E is added to the solution S obtained in step f).

22. The process of either of claims 20 and 21, wherein, during step c), to the solution based on the organomineral precursor A, a compound C is further added which carries, on the one hand, conductive and/or hydrophilic functions and/or precursor functions of conductive and/or hydrophilic functions, and, on the other hand, functions capable of undergoing bonding to the surface of the pores of the mesoporous network.

23. The process of any one of claims 20 to 22, wherein the process further comprises a final step of treatment to liberate or generate conductive and/or hydrophilic functions on the surface of the pores of the material.

24. The process of any one of claims 20 to 23, wherein the organic-inorganic hybrid solution obtained in step a) is left to age at a temperature of 0 to 300°C, preferably of 20°C to 200°C; at a pressure of 100 Pa to 5.10⁶ Pa, preferably of 1000 Pa to 2·10⁵ Pa; for a time of a few minutes to a few days, preferably of one hour to one week.

25. The process of any one of claims 20 to 24, wherein the organic-inorganic hybrid solution obtained in step c) is left to age at a temperature of 0°C to 300°C, preferably of 20°C to 200°C; at a pressure of 100 Pa to 5·10⁶ Pa, preferably of 1000 Pa to 2·10⁵ Pa; for a time of a few minutes to several days, preferably of one hour to one week.

26. The process of any one of claims 20 to 25, wherein the solution S obtained in step f) is left to age at a temperature of 0 °C to 300°C, preferably of 20°C to 200°C; at a pressure of 100 Pa to 5·10⁶ Pa, preferably of 1000 Pa to 2.10⁵ Pa; for a time of a few minutes to a few days, preferably of one hour to one week.

27. The process of any one of claims 20 to 26, wherein the solvents are evaporated at a temperature of 0 to 300°C, preferably of 10°C to 160°C; at a relative humidity (RH) of 0 to 100%, preferably of 20% to 95%.

28. The process of any one of claims 20 to 27, wherein, in step h), the organic-inorganic hybrid solution is deposited or impregnated on a support by a method selected from the method of deposition by centrifugal coating known as "spin coating", the method of deposition by immersion and withdrawal known as "dip coating", the method of deposition by laminar coating known as "meniscus coating", the method of deposition by spraying known as "spray coating", the method of deposition by casting and the method of deposition by evaporation.

## Patentansprüche

1. Leitfähiges organisch-anorganisches Hybridmaterial, das eine mineralische Phase umfasst, bei der Wände ein mesoporöses Netzwerk mit offener Porosität bindende Poren abgrenzen, wobei das Material außerdem ein in diese Wände integriertes und kovalent an die mineralische Phase gebundenes organisches Oligomer oder Polymer und gegebenenfalls eine weitere, sich aus wenigstens einem oberflächenaktiven Mittel zusammensetzende Phase im Inneren der Poren umfasst, wobei wenigstens eine der mineralischen Phase und des organischen Oligomers oder Polymers leitfähige und/oder hydrophile Funktionen aufweist.

2. Material gemäß Ansprüch 1, bei dem die mineralische Phase leitfähige und/oder hydrophile Funktionen auf ihrer Porenoberfläche aufweist.

3. Material gemäß einem der vorangehenden Ansprüche, bei dem das organische Oligomer oder Polymer leitfähige und/oder hydrophile Funktionen aufweist.

4. Material gemäß einem der Ansprüche 1 bis 3, bei dem die sich gegebenenfalls aus wenigstens einem oberflächenaktiven Mittel zusammensetzende Phase leitfähige und/oder hydrophile Funktionen aufweist.

5. Material gemäß einem der Ansprüche 1 bis 4, bei dem die leitfähigen Funktionen aus Kationenaustauschergruppen ausgewählt sind.

6. Material gemäß Anspruch 5, bei dem die Kationenaustauschergruppen aus den folgenden Gruppen ausgewählt sind: SO₃M, -PO₃M₂, -COOM und B(OM)₂, worin M Wasserstoff, ein einwertiges Metallkation oder ⁺NR¹₄ darstellt, worin R¹ unabhängig Wasserstoff, einen Alkylrest oder einen Arylrest darstellt.

7. Material gemäß einem der Ansprüche 1 bis 4, bei dem die leitfähigen Funktionen aus Anionenaustauschergruppen ausgewählt sind.

8. Material gemäß Anspruch 7, bei dem die Anionenaustauschergruppen aus den folgenden Gruppen ausgewählt sind: Pyridyl, Imidazolyl, Pyrazolyl, Triazolyl, Reste der Formel -⁺NR²₃X⁻, worin X ein Anion wie zum Beispiel F, Cl, Br, l, NO₃, SO₄H oder OR darstellt, worin R ein Alkylrest oder ein Arylrest ist, und worin jedes R² unabhängig Wasserstoff, einen Alkylrest oder einen Arylrest darstellt, und aromatische oder nichtaromatische basische Reste, die wenigstens einen aus Imidazol-, Vinylimidazol-, Pyrazol-, Oxazol-, Carbazol-, Indol-, Isoindol-, Dihydrooxazol-, Isoxazol-, Thiazol-, Benzothiazol-, Isothiazol-, Benzimidazol-, Indazol-, 4,5-Dihydropyrazol-, 1,2,3-Oxadiazol-, Furazan-, 1,2,3-Thiadiazol-, 1,2,4-Thiadiazol-, 1,2,3-Benzotriazol-, 1,2,4-Triazol-, Tetrazol-, Pyrrol-, Anilin-, Pyrrolidin- und Pyrazolresten ausgewählten Rest enthalten.

9. Material gemäß einem der vorangehenden Ansprüche, bei dem sich die mineralische Phase aus wenigstens einem aus Metalloxiden, Metalloidoxiden und deren Mischoxiden ausgewählten Oxid zusammensetzt.

10. Material gemäß Anspruch 9, bei dem das Oxid aus Silicium-, Titan-, Zirkonium-, Hafnium-, Aluminium-, Tantal-, Zinn-, Seltenerd- wie etwa Europium-, Cer-, Lanthan- und Gadoliniumoxid und deren Mischoxide ausgewählt ist.

11. Material gemäß einem der vorangehenden Ansprüche, bei dem das mesoporöse Netzwerk eine organisierte Struktur mit einer sich wiederholenden Einheit aufweist.

12. Material gemäß Anspruch 7, bei dem das mesoporöse Netzwerk eine kubische, hexagonale, lamellare, vermikulare, vesikulare oder biskontinuierliche Struktur aufweist.

13. Material gemäß einem der vorangehenden Ansprüche, bei dem die Porengröße 1 bis 100 nm, vorzugsweise 1 bis 50 nm ist.

14. Material gemäß einem der vorangehenden Ansprüche, bei dem das organische Polymer ein wärmestabiles Polymer ist.

15. Material gemäß Anspruch 14, bei dem das organische Polymer aus Polyetherketonen (PEK, PEEK, PEEKK); Polysulfonen (PSU); Polyethersulfonen; Polyphenylethersulfonen (PPSU); Styrol/Ethylen- (SES), Styrol/Butadien- (SBS), Styrol/Isopren-(SIS)Copolymeren, Polyphenylenen wie etwa Poly(phenylensultiden) und Poly(phenylenoxiden); Polyimidazolen wie etwa Polybenzimidazolen (PBI); Polyimiden (PI); Polyamidimiden (PAI); Polyanilinen, Polγpyrrolen; Polysulfamiden; Polypyrazolen wie etwa Polybenzpyrazalen; Polyoxazolen wie etwa Polybenzoxazolen; Polyethern wie etwa Poly-(tetramethyfenoxid) und Poly(hexamethylenoxiden); Poly((meth)acrylsäuren); Polyacrylamiden; Polyvinylen wie etwa Poly(vinylestern), zum Beispiel Polyvinylacetaten, Polyvinylformaten, Polyvinylpropionaten, Polyvinyllauraten, Polyvinylpalmitaten, Polyvinylstearaten, Palyvinyltrimethylacetaten, Polyvinylchloracetaten, Polyvinyltrichloracetaten, Polyvinyltrifluoracetaten, Polyvinylbenzoaten, Polyvinylpivalaten, Polyvinylalkoholen; Acetalharzen wie etwa Polyvinylbutyralen; Polyvinylpyridinen; Polyvinylpyrrolidinen; Polyolefinen wie etwa Polyethylenen, Polypropylenen, Polyisobutylenen; Poly(styroloxiden); fluorierten Harzen und Polyperfluorkohlenstoffen wie etwa Polytetrafluorethylenen (PTFE); Poly(vinylidenfluoriden) (PVDF); Polychlortrifluorethylenen (PCTFE); Polyhexafluorpropenen (HFP); Perfluoralkoxiden (PFA); Polyphosphazenen; Slikonelastomeren und sequenzierten Copolymeren, die wenigstens eine Sequenz umfassen, die sich aus einem aus den vorstehenden Polymeren ausgewählten Polymer zusammensetzt, ausgewählt ist.

16. Material gemäß einem der vorangehenden Ansprüche, bei dem das oberflächenaktive Mittel aus Tensiden wie etwa Alkyltrimethylammoniumsalzen, Alkylphosphaten und Alkylsulfonaten; Säuren wie etwa Dibenzoylweinsäure, Maleinsäure, langkettigen Fettsäuren; Basen wie etwa Harnstoff und langkettigen Aminen; Phospholipiden; doppelt hydrophilen Copolymeren, deren Amphiphilie in situ durch Wechselwirkung mit einem Substrat erzeugt wird, und amphiphilen Multiblock-Copolymeren ausgewählt ist, die wenigstens einen mit wenigstens einem hydrophilen Block verbundenen hydrophoben Block umfassen.

17. Membran umfassend das Material gemäß einem der vorangehenden Ansprüche, das gegebenenfalls auf einem Träger aufgetragen ist.

18. Elektrode umfassend das Material gemäß einem der Ansprüche 1 bis 16.

19. Brennstoffzelle umfassend wenigstens eine Membran gemäß Anspruch 17 und/oder wenigstens eine Elektrode gemäß Anspruch 18.

20. Verfahren zur Herstellung des Materials gemäß einem der Ansprüche 1 bis 16, bei dem die folgenden Schritte durchgeführt werden:
a) - es wird eine Vorläuferverbindung A hergestellt, die sich aus einem Vorläuferfunktionen der mesoporösen mineralischen Phase aufweisenden organischen Oligomer oder Polymer zusammensetzt, und es wird eine organisch-anorganische Hybridlösung in einem Lösungsmittel des Vorläufers A hergestellt;
b) - die in Schritt a) erhaltene organisch-anorganische Hybridlösung wird hydrolysiert und altern gelassen;
c) - die in Schritt b) erhaltene hydrolysierte und gealterte organisch-anorganische Hybridlösung der Vorläuferverbindung A in einer Lösung in einem Lösungsmitten eines mineralischen Vorläufers B, der dazu bestimmt ist, die mesoporöse mineralische Phase darzustellen, wird verdünnt, wodurch eine neue organisch-anorganische Hybridlösung erhalten wird;
d) - die in Schritt c) erhaltene organisch-anorganische Hybridlösung wird hydrolysiert und altern gelassen;
e) - eine Lösung eines oberflächenaktiven Mittels D, das ein Texturierungsmittel für die mesoporöse mineralische Phase ist, wird in einem Lösungsmittel hergestellt;
f) - die in Schritt c) erhaltene Lösung wird mit der in Schritt e) erhaltenen Lösung unter Erhalten einer Lösung S gemischt;
g) - gegebenenfalls wird die in Schritt f) erhaltene Lösung S hydrolysiert und altern gelassen;
h) - die hydrolysierte und gealterte Hybridlösung S wird auf einen Träger aufgetragen oder dieser wird damit getränkt;
i) - es wird ein Verdampfen der Lösungsmittel unter kontrollierten Druck-, Temperatur- und Feuchtigkeitsbedingungen durchgeführt;
j) - es wird eine Wärmebehandlung zum Verfestigen des Materials ausgeführt;
k) - gegebenenfalls wird das oberflächenaktive Mittel D vollständig oder teilweise entfernt;
l) - gegebenenfalls wird der Träger abgetrennt oder entfernt.

21. Verfahren gemäß Anspruch 20, bei dem der in Schritt f) erhaltenen Lösung S außerdem ein Chelatisierungsmittel E zugefügt wird.

22. Verfahren gemäß einem der Ansprüche 20 und 21, bei dem während Schritt c) der auf dem organomineralischen Vorläufer A beruhenden Lösung außerdem eine Verbindung C zugesetzt wird, die einerseits leitfähige und/oder hydrophile Funktionen und/oder Vorläuferfunktionen der leitfähigen und/oder hydrophilen Funktionen und andererseits Funktionen aufweist, die an die Oberfläche der Poren des mesoporösen Netzwerks binden können.

23. Verfahren gemäß einem der Ansprüche 20 bis 22, bei dem das Verfahren außerdem einen letzten Behandlungsschritt zum Freisetzen oder Erzeugen leitfähiger und/oder hydrophiler Funktionen auf der Oberfläche der Poren des Materials umfasst.

24. Verfahren gemäß einem der Ansprüche 20 bis 23, bei dem die in Schritt a) erhaltene organisch-anorganische Hybridlösung bei einer Temperatur von 0 bis 300 °C, vorzugsweise 20 °C bis 200 °C, und einem Druck von 100 Pa bis 5.10⁶ Pa, vorzugsweise 1000 Pa bis 2.10⁵ Pa, während einer Dauer von einigen Minuten bis einigen Tagen, vorzugsweise einer Stunde bis einer Woche altern gelassen wird.

25. Verfahren gemäß einem der Ansprüche 20 bis 24, bei dem die in Schritt c) erhaltene organisch-anorganische Hybridlösung bei einer Temperatur von 0 bis 300 °C, vorzugsweise 20 °C bis 200 °C, und einem Druck von 100 Pa bis 5.10⁶ Pa, vorzugsweise 1000 Pa bis 2.10⁵ Pa, während einer Dauer von einigen Minuten bis einigen Tagen, vorzugsweise einer Stunde bis einer Woche altern gelassen wird.

26. Verfahren gemäß einem der Ansprüche 20 bis 25, bei dem die in Schritt f) erhaltene Lösung S bei einer Temperatur von 0 bis 300 °C, vorzugsweise 20 °C bis 200 °C, und einem Druck von 100 Pa bis 5.10⁶ Pa, vorzugsweise 1000 Pa bis 2.10⁵ Pa, während einer Dauer von einigen Minuten bis einigen Tagen, vorzugsweise einer Stunde bis einer Woche altern gelassen wird.

27. Verfahren gemäß einem der Ansprüche 20 bis 26, bei dem die Lösungsmittel bei einer Temperatur von 0 bis 300 °C, vorzugsweise 10 °C bis 160 °C und einer relativen Feuchte (RF) von 0 bis 100 %, vorzugsweise 20 bis 95 % verdampft werden.

28. Verfahren gemäß einem der Ansprüche 20 bis 27, bei dem in Schritt h) der Auftrag der organisch-anorganischen Hybridlösung auf oder das Tränken damit eines Trägers durch ein Verfahren durchgeführt wird, das aus dem Auftragsverfahren durch "spin-coating" genanntes Schleuderbeschichten, dem Auftragsverfahren durch "dip-coating" genannte Tauchbeschichtung, dem Auftragsverfahren durch "meniscus-coating" genannte Laminarbeschichtung, dem Auftragsverfahren durch "spray-coating" genannte Sprühbeschichtung, dem Auftragsverfahren durch Gießen und dem Auftragsverfahren durch Verdampfung ausgewählt ist.
